# EUROPÄISCHE PATENTANMELDUNG

(11) **EP 2 455 831 A1**
(43) Veröffentlichungstag der Anmeldung: **23.05.2012**
(21) Anmeldenummer: 10192253.2
(22) Anmeldetag: 23.11.2010
(51) Int. Cl.: G05B 19/042

(54) **Engineering einer Datenkommunikation**

(71) Anmelder: SIEMENS AKTIENGESELLSCHAFT, 80333 München (DE)
(72) Erfinder: Brux, Martin, 91097 Oberreichenbach (DE); GÄBEL, Kai, 09221 Neukirchen (DE); Hermes, Klaus, 82269 Geltendorf (DE); Kiesel, Martin, 91099 Poxdorf (DE); Kram, Raimund, 91056 Erlangen (DE); Möhring, Rainer, 97520 Röthlein (DE); Popp, Manfred, 4690513 Zirndorf (DE); Schmidt, Haiko, 09112 Chemnitz (DE); Uhl, Andreas, 91336 Heroldsbach (DE)

(57) **Zusammenfassung**

Beschrieben ist ein Verfahren zur Kommunikation zwischen Funktionsmodulen in der Automatisierungstechnik, wobei ein erstes Funktionsmodul (1) eine erste Kommunikationsschnittstelle (2) aufweist, wobei ein zweites Funktionsmodul (11) eine zweite Kommunikationsschnittstelle (12) aufweist, wobei die erste Kommunikationsschnittstelle (2) der zweiten Kommunikationsschnittstelle (12) zugeordnet wird, wobei die Zuordnung (30) gespeichert wird.

## Beschreibung

Die Erfindung betrifft das Engineering einer Datenkommunikation in einer industriellen Automatisierungsumgebung.

In der industriellen Automatisierungstechnik sind verschiedene Verfahren zur Datenkommunikation bekannt. Dies betrifft beispielsweise Kommunikationsbussysteme (z.B. Profibus, Ehternet, CAN-Bus, usw.) wie auch Geberschnittstellen, I/O-Schnittstellen und dergleichen. Zur Projektierung einer derartigen Datenkommunikation kann ein Engineeringsystem verwendet werden. Bei der Konfiguration der Datenkommunikation werden beispielsweise logische Adressen vergeben. Das Engineeringsystem kann auch derart ausgestaltet sein, dass ein Projekteur Adressen und/oder eine Protokollnutzung für ein Bussystem festlegt. Dies geschieht in der Regel durch Verwendung Alphanumerischer Zeichen in einem Engineeringsystem oder in einem Runtimesystem der Automatisierung. Die Automatisierung betrifft beispielsweise die Automatisierung einer Werkzeugmaschine, einer Presse, einer Druckmaschine, einer Verpackungsmaschine, eines Hebezeuges, eines Roboters, usw.

Eine Aufgabe der vorliegenden Erfindung ist es, eine einfachere Möglichkeit des Engineerings für eine Datenkommunikation zu schaffen.

Eine Lösung der Aufgabe gelingt mittels eines Verfahrens nach Anspruch 1. Weitere vorteilhafte Ausgestaltungen der Erfindung ergeben sich mit Merkmalen der abhängigen Ansprüche 2 bis 9.

Einem Anwender eines Engineeringsystems kann eine einfache, transparente, typsichere, symbolische Zuordnung von Interfaces von Objekten, die auf gleichen oder insbesondere auf unterschiedlichem System liegen angeboten werden. Dabei kann mit Hilfe des Engineeringsystems oder auch eines anderen Systems, die Einrichtung der Kommunikation zwischen Funktionsmodulen innerhalb einer Einrichtung oder zwischen Funktionsmodulen unterschiedlicher Einrichtungen erfolgen, wobei insbesondere eine Kommunikation über ein System hinweg erfolgt. Einrichtungen sind dabei insbesondere Automatisierungskomponenten wie eine Speicherprogrammierbare Steuerung (SPS), eine Bewegungssteuerung, ein I/O-Modul, ein Stromrichter, ein Leitrechner, usw. Vorteilhaft kann beispielsweise eine einfache transparente und doch flexible Zuordnung von IO-Punkten, Klemmen, oder von Achsen zu Antriebsobjekten, die auf integrierten oder eigenen Systemen liegen erfolgen.

Mittels einer Abstrahierung der Kommunikationsverbindungen zwischen Kommunikationsschnittstellen ist es beispielsweise nicht mehr notwendig eine manuelle Zuordnung über Speicher in einem Peripheriebereich, z.B. über Angabe der log. Adresse, oder durch eine feste Zuordnung in einem geschlossenen System festzulegen.

Bei einem Verfahren zur Kommunikation zwischen Funktionsmodulen in der Automatisierungstechnik wird ein erstes Funktionsmodul weist eine erste Kommunikationsschnittstelle auf. Das Funktionsmodul ist insbesondere ein Softwaremodul mit einer speziellen Funktion (z.B. ein Technologiemodul, ein Reglermodul, an Antriebsmodul, ein Logikmodul, usw.). Das Funktionsmodul weist eine Kommunikationsschnittstelle auf, wobei das Funktionsmodul über die Kommunikationsschnittstelle Daten z.B. mit anderen Modulen austauschen kann. Kommunikationsschnittstellen können verschiedenen Typs sein, wobei miteinander verbundenen Schnittstellen einen kompatiblen oder gleichen Typ aufweisen. Ein zweites Funktionsmodul weist also eine zweite Kommunikationsschnittstelle auf, wobei die erste Kommunikationsschnittstelle der zweiten Kommunikationsschnittstelle zugeordnet wird, wobei die Zuordnung gespeichert wird. Die Zuordnung erfolgt dabei beispielsweise mittels eines graphischen Systems (z.B. eines Engineeringsystems, Programmiersystems, Beobachtungssystems, usw.). Dabei ist es z.B. möglich zwei Kommunikationsschnittstellen mittels eines Mauszeigers graphisch zu verbinden um eine Kommunikationsverbindung anzuzeigen bzw. zu programmieren. Vorteilhaft prüft das System ob die Typen übereinstimmen und lässt die Verknüpfung zu bzw. verweigert diese bzw. gibt eine Meldung aus, die auf einen unterschiedlichen bzw. nicht kompatiblen Typ schließen lässt. Die Kommunikationsschnittstellen betreffen unterschiedliche Funktionsmodule, die Funktionsmodule können aber in der gleichen Automatisierungskomponente oder in einer anderen Automatisierungskomponente vorgesehen, programmiert, bzw. ausführbar sein.

In einer Ausgestaltung des Verfahrens ist das erste Funktionsmodul einer ersten Automatisierungskomponente zugeordnet und das zweite Funktionsmodul einer zweiten Automatisierungskomponente.

In einer weiteren Ausgestaltung des Verfahrens ist die bzw. sind die Kommunikationsschnittstellen parametrierbar und/oder modellierbar. Ein Anwender kann Schnittstellen den jeweiligen Anforderungen anpassen. Basieren Funktionsmodule auf Objekten unterschiedlichen Typs, so werden diese Objekttypen bei einer Programmierung instanziiert. Die jeweiligen Typen weisen auch eine Beschreibung möglicher Schnittstellen auf. Bei der Instanziierung kann vorteilhaft eingestellt werden, mit welchen Schnittstellen das Objekt instanziiert werden soll. Dies hängt beispielsweise von der jeweilig auszuführenden Funktion ab. Beispielsweise kann ein Objekt mit einem, zwei, drei oder mehr Geberschnittstellen instanziiert werden.

In einer Ausgestaltung des Verfahrens wird mittels der Zuordnungen der Schnittstellen zueinander automatisch eine Bus basierte Kommunikation zwischen Automatisierungskomponenten parametriert und/oder es werden logische Adressbereiche automatisiert belegt.

In einer Ausgestaltung des Verfahrens wird abhängig von der Parametrierung und/oder Modellierung der Kommunikationsschnittstellen die Kommunikation parametriert.

Sind beispielsweise bei einem Funktionsmodul zwei Geberschnittstellen instanziiert, so wird für diese ein entsprechender Übertragungskanal vorgehalten.

In einer weiteren Ausgestaltung des Verfahrens kann dies auch anders gehandhabt werden. Zum Beispiel kann nur dann, wenn Geberschnittstellen miteinander verbunden sind hierfür eine entsprechende Kommunikation (z.B. ein Kanal, oder ein Platz in einem Busprotokoll) vorgesehen werden. Dieses Vorsehen von Kommunikationsverbindungen (Adressen, bzw. Bandbreite) erfolgt automatisch. Hierdurch wird ein Anwender entlastet.

In einer Ausgestaltung des Verfahrens ist ein Konnektor zur Zuordnung der Kommunikationsschnittstellen vorgesehen, wobei der Konnektor Verschaltungsinformationen aufweist. Auch dies kann die Programmierung von Kommunikationsverbindungen erleichtern. Beispielsweise können Kommunikationsschnittstellen und Konnektoren jeweils unterschiedlichen Typs sein. Wobei nur Schnittstellen und Konnektoren gleichen Typs zusammenpassen und zu verwenden sind.

In einer Ausgestaltung des Verfahrens ist einer bzw. sind zwei Automatisierungskomponenten ein Kommunikationsbussystem zugeordnet. Abhängig vom Typ des Busses können die Kommunikationsverbindungen zwischen den verschiedenen Funktionsmodulen unterschiedlicher Automatisierungskomponenten automatisch in das Bussystem integriert werden.

In einer Ausgestaltung des Verfahrens wird eine Zuordnung von Kommunikationsschnittstellen verweigert und/oder markiert, falls das Kommunikationsbussystem den Kommunikationsbedarf nicht bereitstellen kann, der für zu vielen Kommunikationsverbindungen zwischen den Automatisierungskomponenten benötigt wird.

In einer Ausgestaltung des Verfahrens werden Modellierungsdaten mittels eines objektspezifischen Skriptes erzeugt, wobei das Funktionsmodul ein Objekt darstellt. Ein derartiges Skript kann beispielsweise im Zusammenhang mit einer Instanziierung eines Funktionsmoduls ausgeführt werden.

Durch die graphische Zuordnung von Kommunikationsverbindungen ergibt sich beispielsweise auch eine vereinfachte Zuordnung von IO-Punkten zu IO-Interfaces. Dabei kann für diese und auch für andere Kommunikationsschnittstellen folgendermaßen vorgegangen werden, bzw. zumindest einer dieser Schritte durchgeführt werden:
● Definition eines Automatisierungssystems
   o mit der Einführung und Beschreibung von IO-Interfaces für IO-Variablen oder für die Aussenschnittstellen von Technologischen Objekten;
   o mit der Einführung und Beschreibung von IO-Interfaces (Kommunikationsschnittstellen) für die IO-Punkte auf demselben Automatisierungssystem oder auch für die IO-Punkte auf über ein Kommunikationssystem abgehängten IO-Modulen, und ggfs. der Modellierung der Aussenschnittstellen (Kommunikationsschnittstellen) von SW-Objekten auf intelligenten IO-Modulen, z.B. der Aussenschnittstellen von Antriebsobjekten nach PROFI-drive Profile;
● Interfaces (Schnittstellen) werden modelliert (z.B. bezüglich: Bezeichnung, Typisierung, Eigenschaften, Attribute, Aktualinformationen (vorhandene Verschaltung, noch nicht verschaltet, ...));
● die Modellierungsdaten werden über objekttypspezifische Skripte erzeugt, wobei die objektspezifischen Skriptdateien insbesondere an den Objekte, Modulen, Komponenten oder im dedizierten Engineeringsystem mitgeliefert werden;
● über die Modeliierungsdaten können zu einem ausgewählten IO-Interface passende 'Partner'-Interfaces ausgewählt und typsicher zugeordnet werden, wobei insbesondere nur typpassende Interfaces miteinander verschaltbar sind;
● die Interfaces erhalten dabei symbolische Namen, und sind für den Anwender so einfacher auswählbar/zuordenbar und hantierbar;
● der Auswahlvorgang wird über modellierte Eigenschaften der Interfaces weiter unterstützt;
● als Attribut am Interface ist z.B. auch die Klemmenbezeichnung modellierbar.
● mittels Konnektoren oder Links werden die Zuordnungen gehalten und gespeichert;
● die interne Kommunikation wird abhängig von den Zuordnungen und den eingestellten Funktionen vom System ermittelt, wobei hierbei insbesondere einer der folgenden Schritte erfolgt: eine automatische Telegrammeinstellung, eine automatische Kommunikationskonfiguration (z.B. eine Bestimmung des PROFIdrive-Telegramms, eine Telegrammerweiterung und/oder eine logische Adressierung).

Der Anwender arbeitet dann auf einem technologischen und symbolischen Level und nicht im log. Adressraum. Der logische Adressraum wird vorteilhaft verdeckt.

Entsprechend den Interfaceverschaltungen und der eingestellten Funktionalität wird die Kommunikation vom System eingerichtet (Kommunikationsbereich (logischer Adressraum) und Kommunikationsinhalt (Telegramme)). Dies erfolgt z.B. über einen impliziten Vorgang (z.B. mit dem Übersetzen des Enginieringprojekts) oder basiert auf einer expliziten Aktion.

In einer Ausgestaltung des Verfahrens betrifft ein Funktionsmodul eine Bewegungssteuerung, wobei unter Verwendung eines DSC-Verfahrens Geschwindigkeitsvorsteuerung, Lagereglerverstärkung und die Differenz zwischen Soll- und Istposition als regelungsrelevante Signale an den Antrieb gesendet werden. Diese Signale können vorteilhaft in einer einzigen Schnittstelle zusammengeführt werden und bilden einen Schnittstellentyp. Nur Schnittstellen dieses Typs können dann miteinander verbunden werden. Der Antrieb, welcher ein Modul mit einer Schnittstelle diesen Typs aufweist, bildet sich dann den eigentlichen Lagesollwert. Die Lagereglung findet dabei im Antrieb statt. Bei Verwendung des DSC-Verfahrens wird der wirksame Schleppfehler in der Regelung nachgebildet.

Für eine übersichtliche Darstellung und einfache Änderung und/oder Korrektur von IO-lnterface-Verschaltungen kann einem Anwender ein hierfür geeignetes Tool bereitgestellt werden. Dieses dient einer Übersichtlichen Darstellung der Verschaltung von Interfaces und gegebenenfalls. Änderung/Korrektur der Verschaltungen, wobei diese Kommunikationsschnittstellen, also die IO-Interfaces, über IO-Interfacebeschreibungsdaten modelliert sind. Ein derartiges Tool (System zur Handhabung von Kommunikationsverbindungen) kann beispielsweise zumindest eine der nachfolgenden Funktionen aufweisen:
● Darstellung des Ausgangs-Interfaces und der jeweils verschalteten Partner-Interfaces (der Begriff Interfache ist generell auch im Sinne von Schnittstelle zu verstehen),
● Anzeigen des IO-lnterfacetyps,
● Kennzeichnung von nicht verschalteten AusgangsInterfaces, d.h. jeweils fehlenden Partnerinterfaces,
● Kennzeichnung von 'weggebrochenen' PartnerInterfaces, z.B. durch Löschen des Partners aus dem Projekt;
● Kennzeichnen von Modifikation der Verschaltungsinformation, z.B. durch Umbenennung des Ausgangsinterfaces oder des Verschaltungspartners,
● einfache Reparatur von defekten (nicht korrekten) Verschaltungen durch Eintragen von gültigen, typpassenden Interfaces,
● einfaches Vorgeben des Verschaltungspartners über eine alphanumerische Bezeichnervorgabe,
● Herstellen von Verschaltungen durch Aufruf eines Unterprogramms, und
● Anzeige des Interfacetyps der einzelnen Verschaltungen.

Dabei können Funktionen wie Verschaltungsanzeige, Verschaltungseditieren, Verschaltungskorrektur in einem Tool oder in unterschiedlichen Tools realisiert sein. Dabei ist für den Anwender die Verwendung einer graphischen Bedienung besonders vorteilhaft, da dies zu einer übersichtlichen Darstellung, einem leiten Editieren, Ändern und Korrigieren von InterfaceVerschaltungen (also Zuordnungen) führt und auf der IO-Interface-Modellierung und IO-Interface-Verschaltung im Automatisierungssystemen basieren kann. Bei der Verschaltung von Schnittstellen (Interfaces) kann der Anwender durch die Beschreibungsdaten (z.B. symbolische Bezeichner, Typinformationen, usw.) unterstützt werden.

Für einen Anwender ist eine einfache, funktionale / technologische Auswahl und Zuordnung von IO-Interfaces und Komponenten wichtig und dies unabhängig von einer ggfs. vorhandenen begrenzten Kommunikationsbreite. Dies betrifft z.B. die einfache technologische Zuordnung der Geber in einer Bewegungssteuerung, auch wenn diese z.B. in einem PROFIdrive-Telegramm mit max. nur 2 Geberkanälen übertragen werden. Die Zuordnung zu den internen Geberkanälen soll auch bei flexibler Projektierbarkeit der Geber verdeckt werden können. Damit kann eine direkte auf den entsprechenden Kommunikationskanal/ Adressbereich zielende Zuordnung unterbleiben (z.B. auf Geber 1 oder Geber 2 im PROFI-drive Telegramm). Die direkte technologische Zuordnung eines technologischen IO-Interfaces (also einer technologischen Kommunikationsschnittstelle) zu einem spezifischen typentsprechenden IO-Punkt auch ohne direkte Zuordnung auf ein Kommunikationsinterface ist durch die beschriebene Abstrahierung möglich. So kann z.B. der Geber im Automatisierungssystem zu einem entsprechenden Geber in einer Peripheriekomponente zugeordnet werden.

Durch die Einführung und Auswertung von technologischen Attributen ist das Kommunikationsinterface verdeckbar wobei die Zuordnung trotzdem eindeutig ist. Der explizite Kommunikationskanal muss durch den Anwender nicht mehr angegeben werden. Ein Beispiel für ein derartiges Attribut ist die Verwaltung von Gebersignalen. In einem Automatisierungssystem kann z.B. im ersten Kommunikationskanal immer nur der Geber der Antriebs-Regelung, meist der Motorgeber, übertragen werden; wird ein solches technologisches Kriterium am Interface definiert, braucht bei der Verschaltung des Motorgebers der Achse auf einen Antrieb der Kommunikationskanal nicht mehr angegeben werden.

Durch die eindeutige Zuordnung von Interfaces bei begrenzter Kommunikationsbreite kann auch mit einer begrenzten Anzahl von Kommunikationskanälen umgegangen werden, was durch die Einführung und Anwendung von geeigneten, technologischen Attributen gelingt. Zum Beispiel können ausgewählte Kommunikationskanäle nur ausgewählten Interfaces bei entsprechenden technologiebezogenen Attributen zugeordnet werden. Dabei kann eine begrenzte Kommunikationsbreite, wie auch eine begrenzte Anzahl von Kommunikationskanälen, durch Zuordnung der Interfaces über technologische Attribute, die eine eineindeutige Abbildung auf die Kanäle ermöglichen verdeckt werden. Der Anwender eines Automatisierungssystems kann dadurch entlastet werden, dass interne Kommunikationsfestlegungen oder internen Kommunikationsbedingungen verdeckt werden, was zu einer Reduzierung der Außensicht auf die Technologie, auf Zuordnungen im symbolischen Bereich führt. Der Anwender modelliert Interfaces, wobei technologischer Attribute in geeigneter Weise definiert sind und die Attribute zur Vereinfachung der Anwendersicht und Zuordnung der Kommunikationskanäle über das System genutzt werden. Attribute können insbesondere für die Geberzuordnung bei Objekten, die die Geberdaten mittels eines PROFIdrive-Telegramms übertragen genutzt werden.

Soll eine Kommunikation von Geberdaten programmiert bzw. parametriert werden, ohne dass von einem Anwender selbst logische Adressen zugewiesen werden, so kann dies beispielsweise wie folgt geschehen. Bei einem hierfür vorgesehenen Verfahren zur Kommunikation zwischen Funktionsmodulen in der Antriebstechnik, wobei ein erstes Funktionsmodul eine erste Geberschnittstelle aufweist, wobei ein zweites Funktionsmodul eine zweite Geberschnittstelle aufweist, wird die erste Geberschnittstelle der zweiten Geberschnittstelle funktionell zugeordnet. Dies geschieht beispielsweise mittels einer graphischen Oberfläche. Dabei werden Schnittstellen der Funktionsmodule miteinander verknüpft. Dabei kann insbesondere das erste Funktionsmodul einer ersten Automatisierungskomponente zugeordnet sein und das zweite Funktionsmodul einer zweiten Automatisierungskomponente. Dabei wird insbesondere eine Adresse, insbesondere eine logische Adresse, zur Übermittlung von Geberdaten zwischen den beiden verschiedenen Automatisierungskomponenten automatisch festgelegt. Die Kommunikation zwischen den Automatisierungskomponenten wird durch ein Bussystem zur Übertragung von Daten gewährleistet.

In einer Ausgestaltung des Verfahrens ist das erste Funktionsmodul ein Achsmodul, wobei das zweite Funktionsmodul insbesondere ein Antriebsmodul ist. Demnach kann die erste Automatisierungskomponente eine Steuer- und/oder Regelungseinrichtung, insbesondere eine Bewegungssteuerung sein und die zweite Automatisierungskomponenten ein Stromrichter.

In einer Ausgestaltung des Verfahrens basiert das Achsmodul auf einem Achsobjekt, welches instanziiert wird, wobei das Achsobjekt Beschreibungsdaten für Schnittstellen aufweist, wobei durch die Instanziierung Interfacedaten generiert werden, wobei die erste Geberschnittstelle ein Interfacedatum ist.

In einer Ausgestaltung des Verfahrens basiert das Antriebsmodul auf einem Antriebsobjekt, welches instanziiert wird, wobei das Antriebsobjekt Beschreibungsdaten für Schnittstellen aufweist, wobei durch die Instanziierung Interfacedaten generiert werden, wobei die zweite Geberschnittstelle ein Interfacedatum ist.

In einer Ausgestaltung des Verfahrens werden die Geberschnittstellen graphisch verknüpft. Sind die Geberschnittstellen unterschiedlichen Typs, wird bei einer Verknüpfung von Geberschnittstellen unterschiedlichen Typs eine Verknüpfung automatisch verweigert und/oder eine Fehlverknüpfung angezeigt. Sind die Schnittstellen gleichen Typs wird die Verknüpfung vom System akzeptiert. Das System ist beispielsweise ein Engineeringsystem.

In einer Ausgestaltung des Verfahrens wird die automatisch festgelegte logische Adresse der Buskommunikation für Gebersignale verwendet. Dabei kann sich die logische Adressen für die Buskommunikation automatisch ändern, wenn Kommunikationsschnittstellen, insbesondere Geberschnittstellen verändert werden. Dies ist der Fall, wenn z.B. Geberverbindungen gelöscht werden oder neue Geberverbindungen geschaffen werden.

Bei einem weiteren Verfahren zur Kommunikation zwischen Funktionsmodulen in der Antriebstechnik, weist ein erstes Funktionsmodul eines Automatisierungssystems eine Vielzahl von Geberschnittstellen auf, wobei ein zweites Funktionsmodul (11) einer Peripheriekomponente auch eine Vielzahl von Geberschnittstellen aufweist. Das Automatisierungssystem ist mit der Peripheriekomponente mittels eines Kommunikationsbusses datentechnisch verbunden, wobei die Peripheriekomponente Hardwareanschlüsse für eine Vielzahl von Gebern aufweist, welche einzeln mit der Peripheriekomponente verbunden sind und nicht gemeinsam über einen gemeinsamen Bus. In der Peripheriekomponente sind die Hardwareanschlüsse mit den Geberschnittstellen der Peripheriekomponente zumindest datentechnisch verknüpft, wobei die Geberschnittstellen insbesondere einen Kommunikationsbus betreffen.

In einer Ausgestaltung des Verfahrens weist der Bus ein Busprotokoll für eine Vielzahl von Gebern und zumindest einen Aktor auf, wobei einer der angeschlossenen Geber ein Motorgeber ist.

Für einen Anwender ist die Möglichkeit einer einfachen symbolischen Verschaltung von IO-Interfaces (also Kommunikationsschnittstellen) über geeignetes Tool von Bedeutung. Hierfür kann eine Software bereitgestellt werden, durch welche zumindest eine der im Folgenden beschriebenen Funktionen zur Verschaltung von Schnittstellen (Interfaces) bereitgestellt wird:
● eine Eingangsgröße für die Software ist ein IO-Interface, oder ein Außeninterface eines Technologischen Objektes, im folgenden auch als "zu verschaltendes Interface" bezeichnet, das mit einem anderen, typpassenden IO-Interface auf dem gleichen Gerät oder einen anderen Gerät, im folgenden als "Partner-Interface" bezeichnet verschaltet werden soll, wobei für beide Interfaces IO-Interfacebeschreibungsdaten vorliegen,
● die IO-Interfaces werden mit symbolische Bezeichner angezeigt,
● für die Auswahl des Partner-Interfaces werden typisierte Auswahllisten angezeigt,
● es wird angezeigt, ob die Zielinterfaces bereits verschaltet sind, ob die Zielinterfaces ggfs. mehrfach verschaltbar sind,
● es werden Eigenschaften zu dem zu verschaltenden Interface und zu dem Zielinterface angezeigt,
● es wird der Interfacetyp angezeigt,
● ist der Typ des zu verschaltende Interface ein in einem übergeordneten Typ enthalten, z.B. Element in einer Struktur, oder Typ "Bit" oder "BOOl" in einem BYTE, WORD, kann in die entsprechenden Unterstrukturen, Elementen, enthaltenen Datentypen navigiert werden;
● bei entsprechender weitergehender Modellierung können Einstellungen beim Partner-Interface direkt aus dem Verschaltungstool heraus aktiviert werden,
● bei Nichtvorliegen von IO-Beschreibungsdaten für ein IO-Interface kann auch die Vorgabe des unmittelbaren Kommunikationsspeichers über die Vorgabe der Speicheradresse oder logischen Adresse erfolgen.

Im Folgenden wird die Erfindung beispielhaft anhand von Figuren beschrieben und erläutert. Es zeigt:
- FIG 1: Kommunikationsschnittstellen mit Beschreibungsdaten;
- FIG 2: eine Konnektorverschaltung;
- FIG 3: eine Skriptverarbeitung;
- FIG 4: eine Automatisierungskomponente;
- FIG 5: eine erste Verschaltung zwischen Komponenten;
- FIG 6: eine zweite Verschaltung zwischen Komponenten;
- FIG 7: eine Verarbeitung von Verschaltungsdaten;
- FIG 8: eine erste Bildschirmanzeige von Verschaltungen;
- FIG 9: eine zweite Bildschirmanzeige von Verschaltungen;
- FIG 10: eine dritte Bildschirmanzeige von Verschaltungen;
- FIG 11: eine erste Verschaltung einer Vielzahl von Geberdaten;
- FIG 12: eine zweite Verschaltung einer Vielzahl von Geberdaten;
- FIG 13: einen prinzipiellen Aufbau einer Verschaltungskontrolle;
- FIG 14: eine Achskonfiguration; und
- FIG 15: eine Darstellung von Ausgabereferenzen (Output-Referenz).

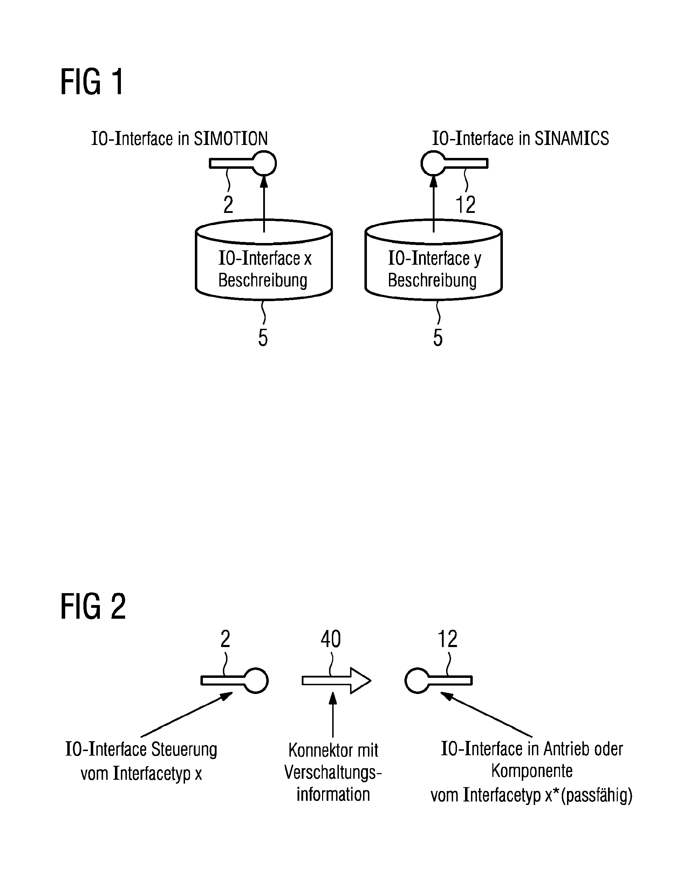

Die Darstellung gemäß Figur 1 zeigt eine erste Kommunikationsschnittstelle 2 und eine zweite Kommunikationsschnittstelle 12. Beide Kommunikationsschnittstellen weisen Beschreibungsdaten 5 auf: IO-Interface x Beschreibung und IO-Interface y Beschreibung. Wie in Figur 2 dargestellt können die Schnittstellen 2 und 12 mittels eines Konnektors 40 symbolisch verbunden werden. Gemäß Figur 2 betrifft die erste Schnittstelle 2 eine Steuerung und das zweite Interface einen Antrieb, wobei beide Schnittstellen gleichen Typs x sind und damit miteinander verbunden werden können.

Mit Hilfe derartiger Kommunikationsschnittstellen 2, 12 mit Typbeschreibung können verschiedene Vorteile erzielt werden, wie z.B.:
● eine einfache, transparente, typsichere, symbolische Zuordnung von IO-Punkten zu IO-Interfaces von Objekten, die auf gleichen oder insbesondere auf unterschiedlichen, verteilten Komponenten liegen,
● ein einfaches Verfahren zur transparenten und typsicheren symbolischen Zuordnung von IO-Punkten zu lokalen und/oder auch verteilten IO-Interfaces und in Automatisierungssystemen, mittels:
   o Modellierung der IO-Interfaces
   o typsicheren Verschaltung der IO-Interfaces
   o Aufbau der internen Kommunikation aus den Modellierungsdaten und der Verschaltungsinformation über das System;
● automatisierte Erzeugung der Modellierungsdaten für die Interfaces mittels Skriptdateien,
● automatische Bereitstellung der Skriptdaten mit den Komponenten bzw. Modulen oder Bereitstellung im Engineeringsystem,
● Erzeugung der IO-Beschreibungsdaten aus Daten, Parameter, aktuellen Einstellungen der Objekte und Komponenten,
● Verwendung der IO-Interfaces können als IO-Variablen in einem Automatisierungssystem, oder auch Außenschnittstellen von einzelnen Objekten, insbesondere Technologischen Objekten,
● Speicherung der Konnektoren mit den Zuordnungsinformationen der IO-Interfaces mit einem Projekt,
● Anwendung der typisierten Interfaces auch auf Automatisierungssysteme, die im Laufzeitsystem nur über den log. Adressbereich Daten austauschen, wenn die Auflösung der symbolischen Zuordnung, die Bestimmung der Kommunikation und der logischen Adressen im Engineeringsystem erfolgt;
● wahlweise Ablage der symbolischen Zuordnungen im Laufzeitsystem zum Auslesen für ein HMI Bediensystem,
● Diagnoseanzeige von Objekten mit Konnektoren, Zuordnungen in Listen oder grafisch, und/oder
● Umprojektierung von Eigenschaften, Attributen aus der grafischen Verschaltung heraus.

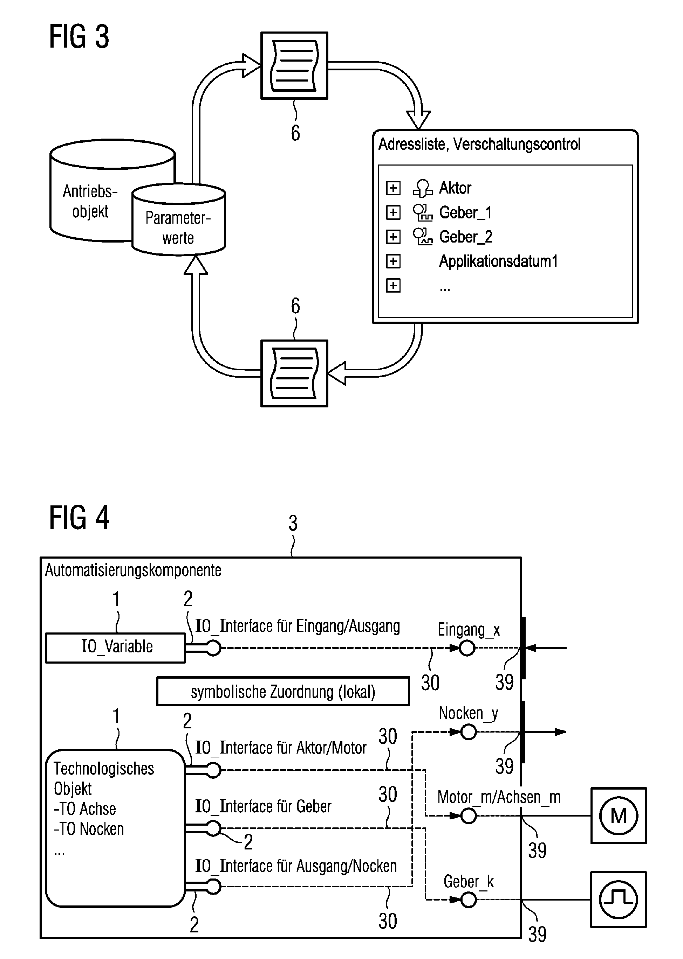

Die Darstellung gemäß Figur 3 zeigt die Verwendung von Skriptdateien 6 zur Erzeugung von IO-Modellierungsdaten. Hierfür werden Objektdaten, Parameterdaten bzw. auslesbare Eigenschaften und Beschreibungsdaten verwendet. Dies ist in Figur 3 am Beispiel eines Antriebsobjektes dargestellt. Aus der Adressliste kann über ein zweites Skript 6 optional auch eine Einstellung eines Telegramms auf Basis der von einem Nutzer benötigten Interfaces erfolgen. Derart ist der Kreis zu den Parameterdaten geschlossen. Für ein Antriebsobjekt können beispielsweise folgende Beschreibungsdaten typbezogen notwendig sein:
● Beschreibung aller möglichen Interfaces und möglichen Eigenschaften (Maximalausbau),
● Skript zur Ermittlung aktueller Interfaces aus Parameterwerten, und
● Skript zur Einstellung des Telegramms auf Basis benötigter Interfaces (optional).

Die Darstellung gemäß Figur 4 zeigt eine symbolische Zuordnung mit Hilfe der IO-Interface-Modellierung. Dargestellt ist eine erste Automatisierungskomponente 3 wie z.B. eine Steuerung. Hier befinden sich Nutzer IO-Interfaces 2 und Hardwareinterfaces 39 auf derselben Komponente. An den Hardwareschnittstelen 39 sind beispielsweise ein Motor M und ein Geber angeschlossen. Die Hardwareschnittstellen 39 sind über Verbindungen 30 symbolisch zugeordnet. Die Zuordnung betrifft dabei z.B. ein erstes Funktionsmodul 1, welches ein Technologieobjekt ist (z.B. das Technologieobjekt Nocke oder das Technologieobjekt Achse). Die Hardwareschnittstellen 39 an den dargestellten IO-Punkten betreffen wie dargestellt z.B. Eingänge, Ausgänge, Aktor/Motor/Antrieb, bzw. Geber/Sensor.

Vorteilhaft können die Interfaces variabel modelliert werden, was der Einführung von Konnektoren zur Verschaltung der Interfaces insbesondere im Engineeringsystem geschuldet ist. Dadurch ist eine technologische Systemmodellierung bzgl. IO-Interfaces und Systemkommunikation möglich. Der Anwender wird beim Verschaltungsvorgang z.B. derart unterstützt, dass nur typpassende Verschaltungen, von noch freien Verschaltungspunkten zulässig sind. Die Systemkommunikation wird aus der Verschaltung, Modeliierung und ggfs. ergänzenden Regeln erstellt, wobei die interne Kommunikation und deren Einstellung für den Anwender verdeckt werden kann. Die Modellierung und die graphische Konnektorverschaltung kann für ein anwendungsbezogenes, technologiegeeignetes Engineering genutzt werden, so dass ein Projektieren von Zuordnungen auf einer anwenderbezogenen, technologischen Ebene möglich ist.

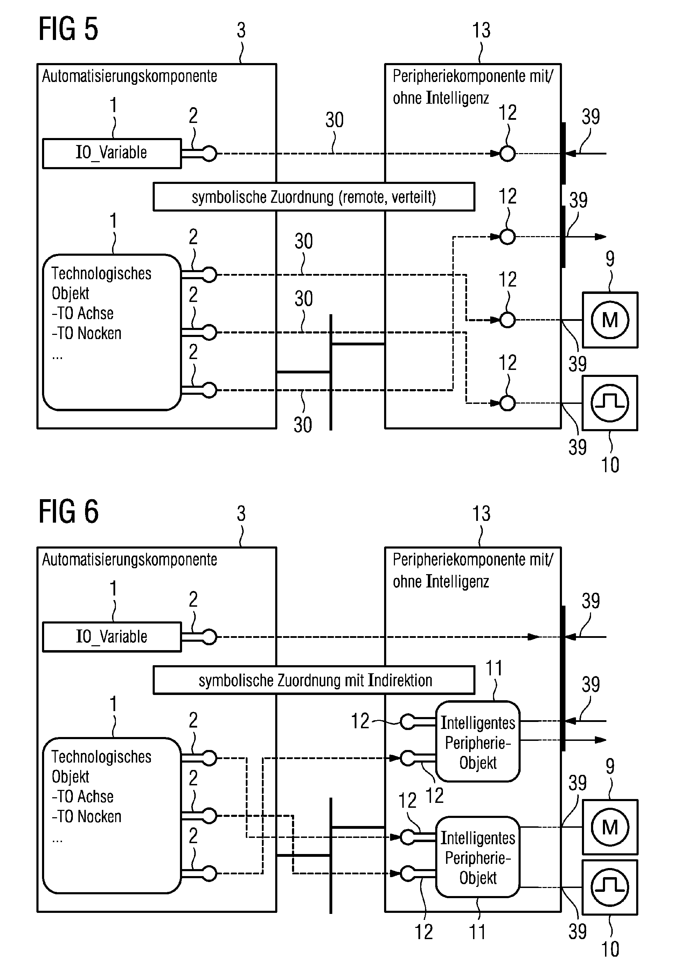

Die Darstellung gemäß Figur 5 zeigt zwei Automatisierungskomponenten 3, 13. Die erste Automatisierungskomponenten weist ein Technologieobjekt 1 als ein Funktionsmodul auf. Das Modul weist Schnittstellen 2 auf, welche über Konnektoren 30 mit IO-Punkten 12, also Schnittstellen einer weiteren Komponente 13 verbunden sind. Die Komponente 13 ist eine Peripheriekomponente, an welche über Hardwareschnittstellen 39 Hardware wie ein Geber 10 oder ein Motorkabel eines Motors 9 angeschlossen ist. Die Konnektoren 30 zwischen den Komponenten 3 und 13 sind strichliniert dargestellt. Der reale Bus zwischen den Komponenten 3 und 13 ist angedeutet durch eine Netzstruktur mit Abzweigen zu den Komponenten, welche mit durchgezogenen Strichen dargestellt ist. Gemäß Figur 5 ist eine verteilte Zuordnung zu IO-Punkten 12 als Schnittstellen gezeigt, wobei die Schnittstellen 12 direkt Hardwareanschlüssen 39 zugeordnet sind. Die Darstellung gemäß Figur 6 unterscheidet sich von der in Figur 5 dahingehend, dass die Zuordnung indirekt erfolgt. Dies bedeutet, dass die Schnittstellen 2 der Module 1 der Komponente 3 zumindest teilweise erst mit Schnittstellen 12 der Module 11 der Komponente 13 verbunden sind. Dabei handelt es sich um intelligente Peripherieobjekte. Diese Module 11 sind dann mit Anschlüssen 39 der Komponente 13 verknüpft.

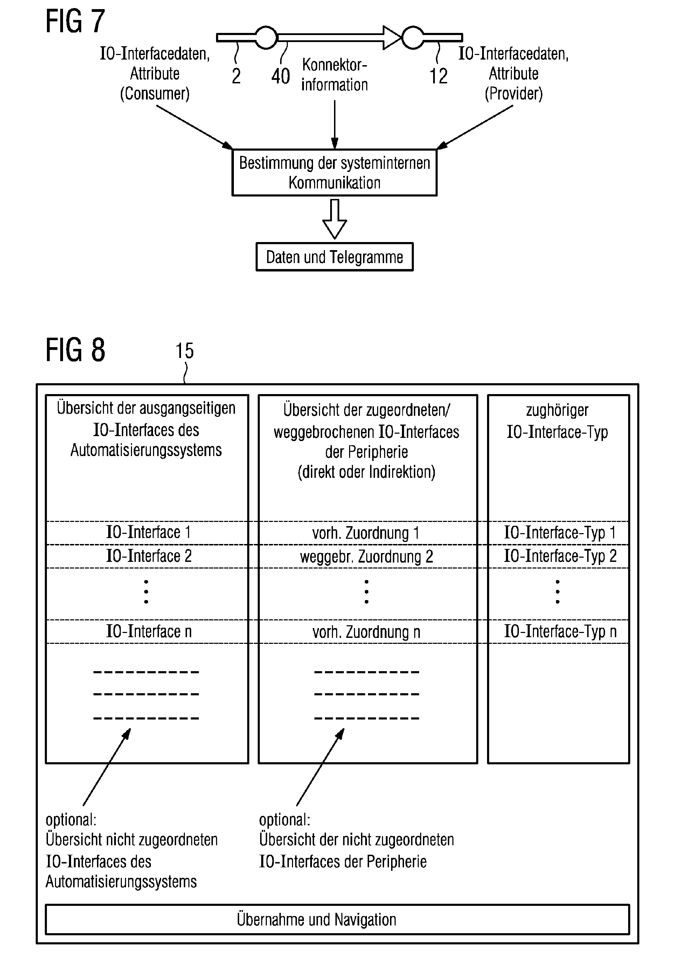

Die Darstellung gemäß Figur 7 zeigt Schnittstellen 2 und 12, welche über einen Konnektor 40 verbunden sind. Sowohl den Schnittstellen 2 und 12 als auch dem Konnektor 40 sind Informationsdaten zugeordnet (insbesondere typspezifische Informationsdaten). Aus diesen Informationsdaten wird die systeminterne Kommunikation bestimmt. Hieraus resultieren dann Daten bzgl. der Telegrammstruktur für den Bus zwischen Automatisierungskomponenten.

Die Darstellung gemäß Figur 8 zeigt eine Bildschirmanzeige 15, welche einem Anwender eine Übersicht über Verschaltungen anbietet. Diese ermöglicht dem Anwender auch eine Korrektur von Verschaltungen.

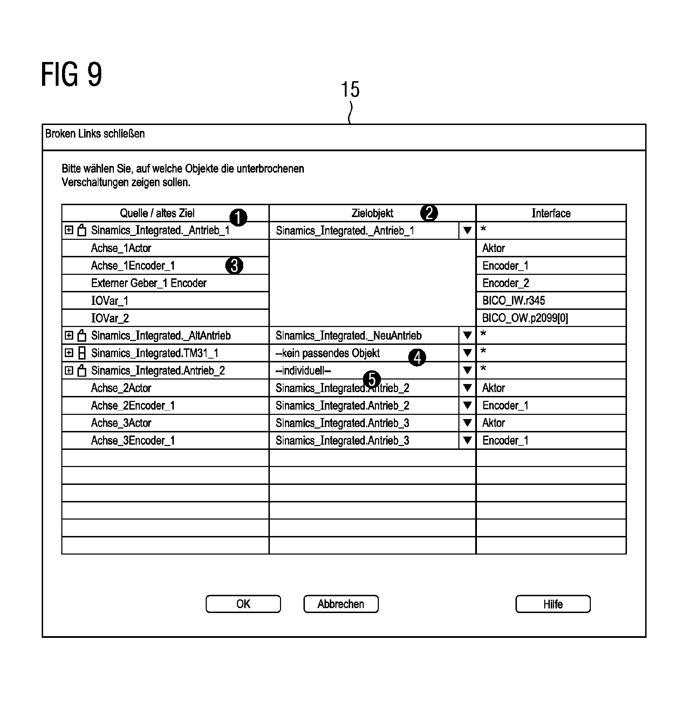

Die Darstellung gemäß Figur 9 zeigt eine weitere Bildschirmanzeige 15 für Verschaltungen von Schnittstellen. Zum besseren Verständnis sind Markierungspunkte 1 bis 5 gesetzt, welche Aufgabe bzw. Funktion der jeweiligen Anzeige beschreiben:
1. Name des Objekts zu dem eine Verschaltung (Link) verloren wurde (altes Ziel, welches nicht mehr verbunden ist);
2. Angabe des Zielobjektes, also des Objektes mit welchem eine neue Verschaltung herzustellen ist. Dies kann komplett für ein gesamtes Antriebsobjekt erfolgen (Aktor, Encoder_1, Encoder_2, BICO, usw.) wie in den ersten Zeilen dargestellt oder im Detail einzeln für jede Schnittstelle (dargestellt in den letzten 5 belegten Zeilen). Das System kann muss aber nicht hierfür eine Vorauswahl treffen;
3. Dargestellt ist ein aufgeklappter Baum für den Antrieb)_1. Aufgeklappt ist erkennbar, welche Verschaltungen neu verbunden werden. Die linke Seite (Quelle) gibt dabei z.B. das Interface einer Bewegungssteuerung an; Die rechte Seite (Ziel), das Interface unterhalb des Objekts, dessen Verschaltungen wiederherzustellen sind;
4. Für den Fall, dass kein passendes Objekt existiert, gibt es einen Eintrag in der Auswahlliste; Ist dieser Eintrag ausgewählt, so bleiben die betreffenden Verschaltungen unverändert; und
5. Vorteilhaft kann ein Anwender bei Bedarf jedes Interface individuell verschalten.

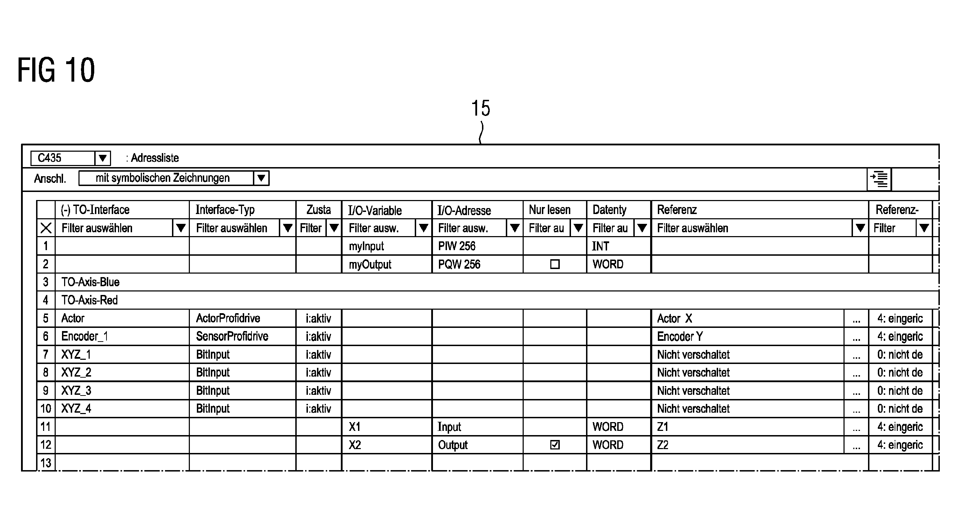

Die Darstellung gemäß Figur 10 zeigt eine weitere Möglichkeit einer Bildschirmanzeige zur Darstellung von Verschaltungsinformationen.

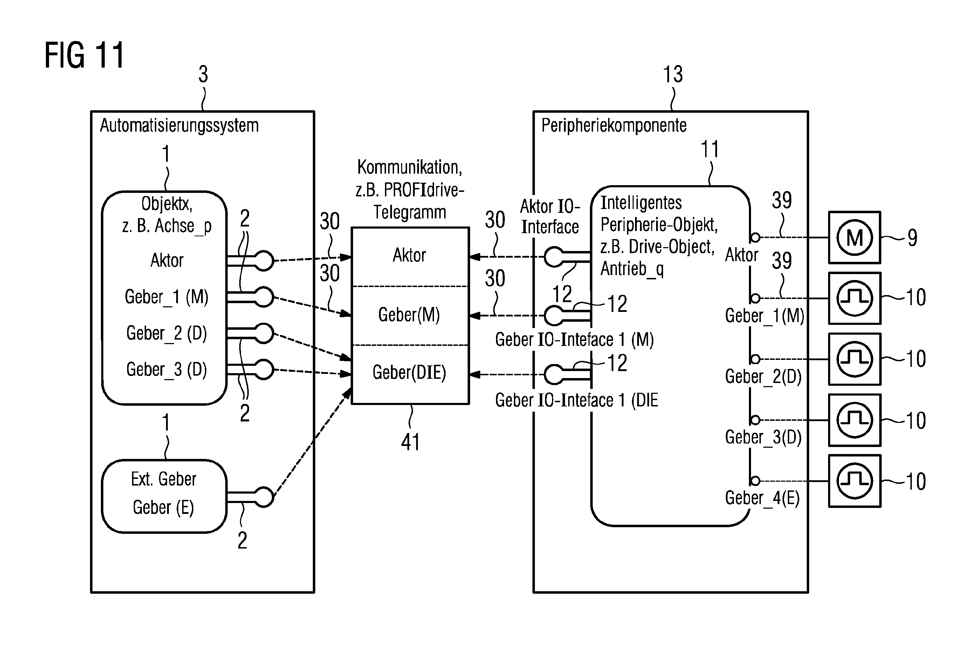

Die Darstellung gemäß Figur 11 zeigt ein Beispiel für eine Verschaltung von Geberdaten. Dargestellt ist ein Achsobjekt 1, welches Schnittstellen 2 für einen Aktor und 3 Geber aufweist. Zusätzlich ist auch noch ein weiteres Objekt 1 für einen externen Geber vorhanden. Die Schnittstellen 2 werden über ein automatisch generiertes Telegramm von der ersten Automatisierungskomponente 3 zur zweiten Automatisierungskomponenten 13 übertragen. Die zweite Automatisierungskomponenten 13 ist eine Peripheriekomponente, welche Anschlüsse 39 für einen Motor 9 und Geber 10 bereithält. In einem Funktionsmodul 11, welches als Objekt programmiert ist, werden die Anschlüsse 39 mit den Schnittstellen 12 verknüpft.

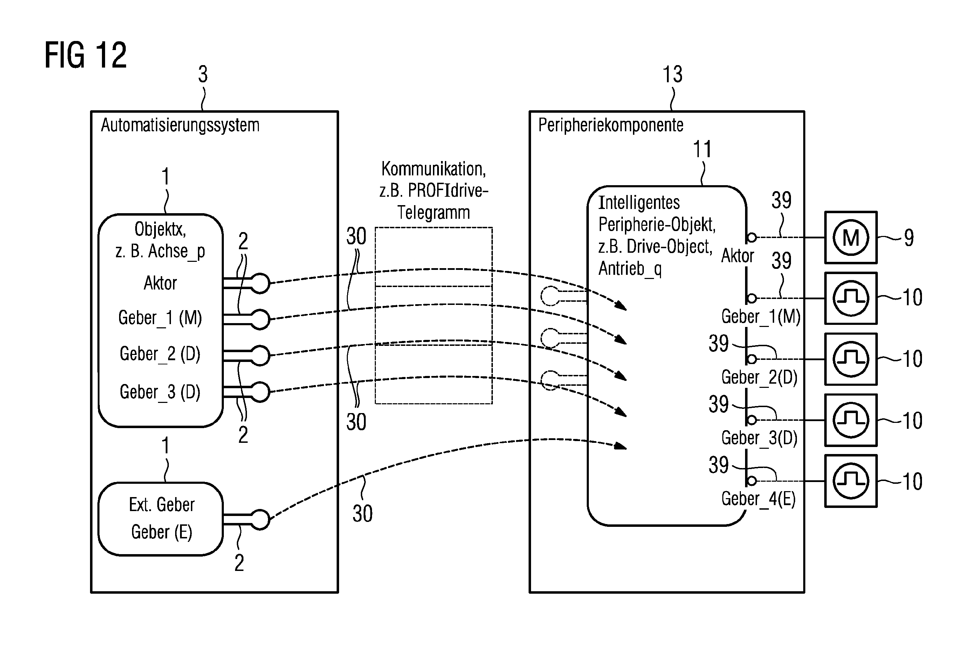

Die Darstellung gemäß Figur 12 zeigt in Ergänzung zu Figur 11, dass die Verschaltung 30 zwischen den Komponenten 3 und 13 graphisch erfolgt. Dabei ergibt sich folgende Zuordnung. Die Achse_p ist dem Antrieb_q zugeordnet (Achse/Aktor wird vom System verschaltet).

Die Achse_p_Geber_ 1 ist ebenso dem Antrieb_q zugeordnet (Motorgeber 1(M) wird vom System auf Geber-IO-Interface 1 verschaltet) .

Die Achse p Geber 2 ist ebenso dem Antrieb q zugeordnet (Direkter Geber wird vom System auf Geber-IO-Interface 2 verschaltet) .

Die Achse_p_Geber_3 ist ebenso dem Antrieb_q zugeordnet (Direkter Geber wird vom System auf Geber-IO-Interface 2 verschaltet) .

Der externe Geber ist dem Antrieb_q zugeordnet (Externer Geber wird vom System auf Geber-IO-Interface 2 verschaltet). Zur Verschaltung von Geberdaten über zwei Komponenten 3, 13 hinweg sind also in jeder Komponenten Objekte 1, 11 mit Schnittstellen vorgesehen, wobei die Schnittstellen graphisch ohne Adressangabe verknüpfbar sind und sich die Adressen und Telegrammgenerierung automatisch aus den Schnittstelleninformationen ermitteln lässt. Zur Verschaltung von Interfaces liegen insbesondere Beschreibungsdaten wie symbolische Bezeichner, Typinformationen, etc. vor.

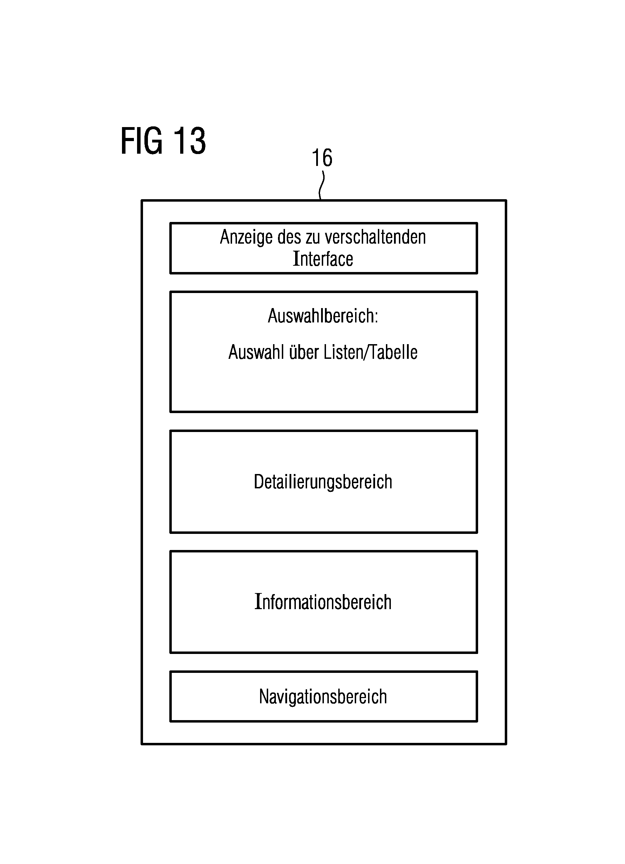

Die Darstellung gemäß Figur 13 zeigt eine Struktur für eine Verschaltungskontrolle, wobei dargestellt ist, welche Segmente eine derartige Darstellung 16 aufweisen kann.

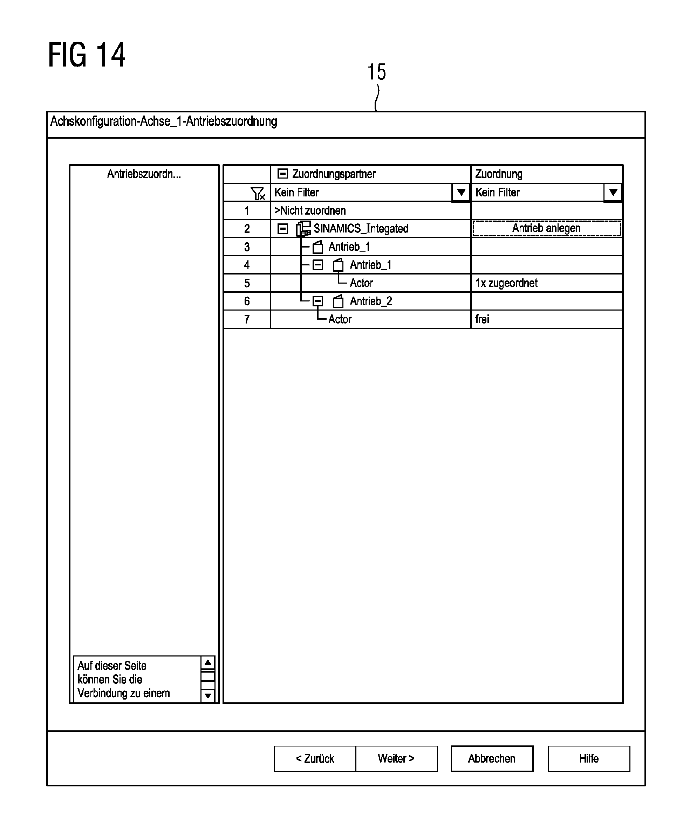

Die Darstellung gemäß Figur 14 zeigt, wie eine Achskonfiguration und eine Antriebszuordnung einem Anwender auf einem Bildschirm 15 dargestellt werden kann. Damit lassen sich in einfacher Weise Verschaltungen einer Achse präsentieren.

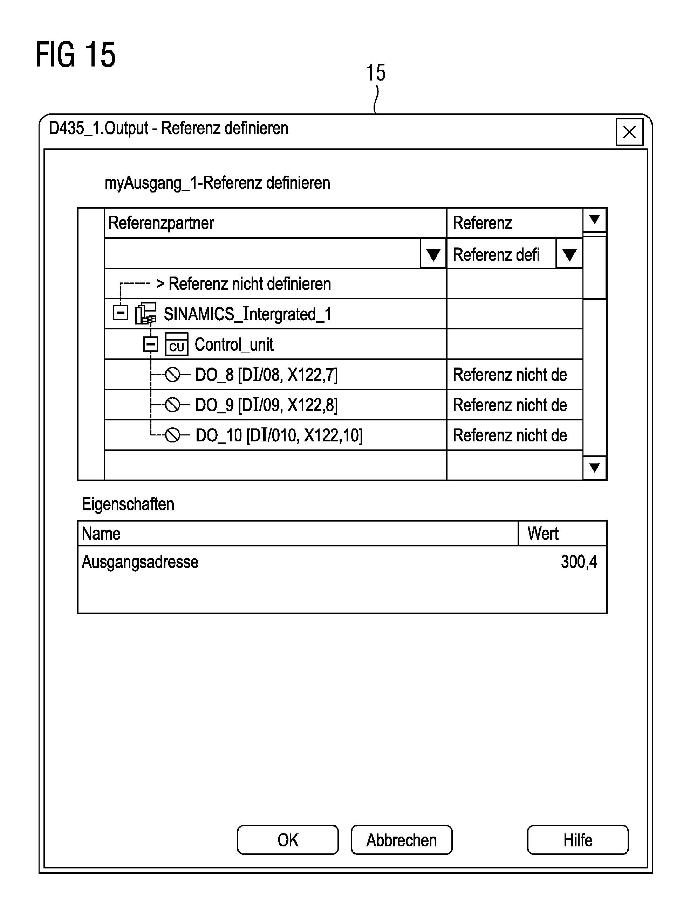

Die Darstellung gemäß Figur 15 zeigt ein Beispiel für eine Verschaltung von IO-Punkten.

## Patentansprüche

1. Verfahren zur Kommunikation zwischen Funktionsmodulen in der Automatisierungstechnik, wobei ein erstes Funktionsmodul (1) eine erste Kommunikationsschnittstelle (2) aufweist, wobei ein zweites Funktionsmodul (11) eine zweite Kommunikationsschnittstelle (12) aufweist, wobei die erste Kommunikationsschnittstelle (2) der zweiten Kommunikationsschnittstelle (12) zugeordnet wird, wobei die Zuordnung (30) gespeichert wird.

2. Verfahren nach Anspruch 1, wobei das erste Funktionsmodul (1) einer ersten Automatisierungskomponente (3) zugeordnet ist, wobei das zweite Funktionsmodul (11) einer zweiten Automatisierungskomponente (13) zugeordnet ist.

3. Verfahren nach Anspruch 1 oder 2, wobei die Kommunikationsschnittstellen (2, 12) parametrierbar und/oder modellierbar sind.

4. Verfahren nach einem der Ansprüche 1 bis 3, wobei mittels der Zuordnungen (30) eine Bus basierte Kommunikation zwischen Automatisierungskomponenten (3, 13) parametriert wird und/oder logische Adressbereiche automatisiert belegt werden.

5. Verfahren nach Anspruch 4, wobei abhängig von der Parametrierung und/oder Modellierung der Kommunikationsschnittstellen (2, 12) die Kommunikation parametriert wird.

6. Verfahren nach einem der Ansprüche 1 bis 5, wobei ein Konnektor (40) zur Zuordnung der Kommunikationsschnittstellen (2, 12) vorgesehen ist, wobei der Konnektor (40) Verschaltungsinformationen aufweist.

7. Verfahren nach einem der Ansprüche 1 bis 5, wobei Automatisierungskomponenten (3, 13) ein Kommunikationsbussystem (41) zugeordnet wird.

8. Verfahren nach Anspruch 7, wobei eine Zuordnung von Kommunikationsschnittstellen (2, 12) verweigert und/oder markiert wird, falls das Kommunikationsbussystem (41) den Kommunikationsbedarf nicht bereitstellen kann.

9. Verfahren nach einem der Ansprüche 3 bis 8, wobei Modellierungsdaten mittels eines objektspezifischen Skriptes erzeugt wird, wobei das Funktionsmodul (1, 11) ein Objekt darstellt.
